# FASCICULE DE BREVET EUROPEEN

(11) **EP 3 492 896 B1**
(45) Date de publication et mention de la délivrance du brevet: **25.11.2020**
(21) Numéro de dépôt: 18209664.4
(22) Date de dépôt: 30.11.2018
(51) Int. Cl.: G01L 17/00, B60C 23/04, G01L 27/00, G01M 17/02

(54) **SYSTÈME DE TRAITEMENT DE DONNÉES ÉMISES PAR DES DISPOSITIFS DE MESURES DE L ÉTAT DES PNEUS, ET APPAREIL PORTABLE ASSOCIÉ**
VERARBEITUNGSSYSTEM VON DATEN, DIE VON MESSVORRICHTUNGEN DES REIFENZUSTANDS AUSGEGEBEN WERDEN, UND ENTSPRECHENDES TRAGBARES GERÄT
SYSTEM FOR PROCESSING DATA TRANSMITTED BY TYRE CONDITION MEASUREMENT DEVICES, AND ASSOCIATED PORTABLE APPARATUS

(30) Priorité: 30.11.2017 FR 1761467
(43) Date de publication de la demande: 05.06.2019
(73) Titulaire: ATEQ, 78340 Les Clayes sous Bois (FR)
(72) Inventeur: BREBANT, Morgan, 78950 GAMBAIS (FR)
(74) Mandataire: Vidon Brevets & Stratégie

(56) Documents cités:
- EP-A1- 1 972 468
- EP-A1- 2 732 988
- WO-A1-2013/067004
- GB-A- 2 543 851

## Description

### 1. Domaine de l'invention

L'invention se rapporte à l'acquisition et l'analyse de données émises par des dispositifs destinés à contrôler l'état des pneus d'un véhicule. L'invention concerne plus particulièrement le fait que lesdits dispositifs sont de type différent et mesurent au moins la pression des pneus, un écart trop grand dans les mesures révèle un mauvais fonctionnement d'au moins un des dispositifs.

### 2. Etat de la technique

De nos jours, les véhicules disposent de nombreux équipements améliorant la sécurité des passagers. Un élément particulièrement sensible pour la sécurité est les pneus, qui doivent être en bon état afin d'adhérer à la route et permettent un bon contrôle de la trajectoire. La défaillance d'un pneu est généralement due à une fuite du gaz contenu à l'intérieur. Pour éviter l'accident, il est souhaitable de vérifier régulièrement l'état de chaque pneu du véhicule, tant au niveau de leurs usures que de leur pression.

Des équipements de surveillance de la pression des pneus (appelé « TPMS », acronyme de l'expression Anglo-saxonne « Tyre Pressure Management System ») sont obligatoires dans certains pays, comme les U.S.A.. En Europe, ce système est devenu obligatoire sur tous les véhicules neufs de moins de 3,5 tonnes depuis 2014. Le Japon a déclaré rendre obligatoire cette mesure 1 an après son application en Europe. D'autres pays comme la Russie, l'Indonésie, les Philippines, Israël, la Malaisie et la Turquie, entre autres, ont déjà rendu, ou vont rendre, obligatoire cette mesure. Lorsque la pression du pneu diminue anormalement et que le pneu se déforme, ce qui peut provoquer une explosion, un témoin d'alarme sonore et/ou lumineux apparaît sur le tableau de bord du véhicule pour avertir le conducteur.

La détection d'un pneu à plat s'effectue de deux manières, soit de façon directe, soit de façon indirecte. Les TPMS indirects n'utilisent pas de capteurs de pression physiques, mais mesurent les pressions d'air en surveillant les vitesses individuelles de rotation des roues et d'autres signaux disponibles en dehors du pneu. En TPMS direct, un capteur de pneu est installé dans la roue, de préférence au niveau de la tige de soupape du pneu. Ces capteurs mesurent divers paramètres tels que : la pression du gaz, la température des pneus, la vitesse de rotation des roues. Les capteurs eux-mêmes comprennent un code d'identification de capteur spécifique (ID) et sont capables de recevoir des signaux électroniques et d'envoyer des signaux électroniques sans fil vers une unité ou module de contrôle électronique (appelé par la suite « ECU », acronyme de l'expression Anglo-saxonne « Electronic Control Unit ») embarqué dans le véhicule. Si un capteur de roue transmet une pression des pneus ou une autre condition dans un pneu qui est au-dessus ou au-dessous d'un niveau prédéterminé, l'ECU émet des signaux d'alerte vers le tableau de bord à l'intérieur de l'habitacle pour avertir le conducteur.

Un capteur TPMS direct se présente sous la forme d'un module électronique comprenant généralement une pile électrique, une carte de circuit imprimé avec des antennes pour la communication radio bidirectionnelle à courte portée, un capteur de pression d'air, un capteur de température, un dispositif de détection de rotation ou un accéléromètre, un contrôleur programmable et une mémoire pour mémoriser au moins le capteur spécifique ID et d'autres informations en fonction du système TPMS et des capacités. Lors du roulement, les capteurs émettent par radio à courte portée des données vers l'ECU du véhicule à des fins de traitement.

Sur les chaines de fabrication de véhicule et les garages automobile, les opérateurs disposent d'outils portatifs pour vérifier l'état des pneus. L'un d'entre eux qui est décrit dans la demande de brevet WO 2013/063061 déposée par la demanderesse et publiée le 2 mai 2013 concerne un système de mesure de la pression des pneus montés sur un véhicule. Cet outil, appelé outil TPMS dans la suite du document est un appareil portable comportant typiquement une batterie, un processeur, une mémoire, une interface utilisateur pour l'affichage d'informations et pour l'entrée de commandes, et un moyen de communication radio. Ce moyen de communication permet notamment la communication avec des capteurs TPMS et éventuellement la communication longue distance avec un serveur via un réseau. L'outil TPMS peut également comporter des ports de communication pour transmettre des données vers un réseau au sol à l'aide d'un câble.

Les opérateurs disposent également d'outils spécifiques pour mesurer l'usure des pneus consistant principalement à mesurer la profondeur de la bande de roulement. La plupart des pays spécifient une exigence légale pour une profondeur minimale de la bande de roulement, qui est liée à la sécurité. Au Royaume-Uni par exemple, la loi exige que les pneus de voiture atteignent une profondeur minimale de 1,6 mm dans une bande continue autour des trois quarts du pneu. Il est connu de mesurer une profondeur de bande de roulement à l'aide d'une broche couplée à une jauge mécanique. La broche est suffisamment petite pour s'adapter à la bande de roulement du pneu et la jauge mécanique mesure une distance entre une surface de roulement du pneu et un point le plus profond de la bande de roulement. D'autres moyens sans contact sont également connus tel qu'un appareil utilisant un télémètre laser ou une triangulation laser. Il est également connu de mesurer une profondeur de bande de roulement de pneu à l'aide d'une broche couplée à une jauge électronique, qui peut utiliser une technique de mesure Vernier.

En plus de la mesure de la pression par les capteurs TPMS, les opérateurs utilisent aussi des dispositifs manométriques manuels qui se branchent directement sur la valve du pneu et qui mesurent la pression du gaz à travers cette valve. Cette mesure permet de corroborer celles fournies par chaque capteur TMPS et ainsi de vérifier leur bon fonctionnement.

Ces interventions sont longues et fastidieuses pour les opérateurs et nécessitent plusieurs outils mis à leurs dispositions, ce qui les rendent au final assez coûteuses à la fois en temps et en argent. Il existe donc un besoin d'améliorer l'efficacité des opérateurs des chaines de fabrication de véhicules et des garages automobile lors des opérations de contrôle de l'état des pneus d'un véhicule, et un besoin de diminuer les coûts.

La demande de brevet FR2 863 205 déposée par la société MICHELIN décrit un système permettant de contrôler la pression et la température des pneumatiques et de vérifier en même temps le fonctionnement des capteurs TMPS équipant les pneus. Ce document ne divulgue pas de faire évoluer le système pour le contrôle d'autres caractéristiques.

La demande de brevet GB2543851 déposée par la société BARTEC décrit un appareil portable pour tester les systèmes TPMS embarqués dans des véhicules. L'appareil portable dispose d'une base de données permettant de référencer la pression des pneus selon leur type et de pouvoir ainsi facilement la contrôler. Cet appareil ne permet pas de contrôler d'autres caractéristiques que la pression.

Le document EP 2 732 988 - ATEQ décrit un appareil destiné à mesurer des caractéristiques d'un pneu monté sur un véhicule. L'appareil 10 dispose également d'une liaison pour recevoir une mesure de profondeur de sillon, en provenance d'un palpeur connecté à l'appareil. L'appareil mesure la pression des pneus à l'aide d'un capteur spécifique et affiche les données afin qu'un technicien les lise et vérifie qu'elles se situent dans des limites acceptables par le fabricant du pneu.

Le document EP 1972 468 - BRIDGESTONE Corp. décrit un système de contrôle de pneu pour mesurer la pression interne, l'abrasion de sa surface et la profondeur de ses sillons. Le système comporte un premier dispositif de type TMPS qui mesure la pression dans la chambre à l'intérieur du pneu ainsi que sa température, un autre dispositif qui mesure l'état d'usure du pneu, en utilisant notamment un palpeur de profondeur mesurant la hauteur des sillons, et un dernier dispositif qui assure la communication avec les deux premiers et une interface utilisateur.

Le document WO 2013/067004 - MEASUREMENT Ltd enseigne un appareil affichant l'usure d'un pneu en mesurant la profondeur des sillons, sa pression interne et sa température. L'appareil dispose d'un afficheur, un détecteur infrarouge pour mesurer la température d'un endroit pointé par un laser, un embout se connectant à la valve du pneu et un palpeur mécanique qui s'enfonce dans les sillons pour en déterminer la profondeur.

La présente invention décrit une amélioration consistant à rationaliser l'utilisation des différents outils et à rendre plus efficaces les interventions effectuées par les opérateurs.

### 3. Exposé de l'invention

L'invention a pour but de pallier les inconvénients exposés ci-dessus, ainsi que d'autres qui apparaîtront dans la suite de ce document.

À cet effet, l'invention a pour objet un système de traitement de données émises par des dispositifs de mesures de l'état des pneus, comportant notamment des capteurs de pression montés sur les pneus d'un véhicule, selon la revendication 1, ledit système emportant un appareil portable doté d'une interface utilisateur apte à entrer en communication avec lesdits capteurs de pression, le système comportant en outre des moyens additionnels de mesure de la pression des pneus, tels qu'un manomètre électronique comportant un capteur de pression destiné à venir manuellement en contact avec la valve à l'extérieur du pneu pour mesurer sa pression, ledit manomètre électronique communiquant avec l'appareil portable pour transmettre la valeur de pression mesurée, l'appareil portable comportant des moyens de corrélation des deux mesures de pression. Le système comporte en outre avantageusement des moyens de mesure de l'usure des pneus, (comme par exemple une jauge électrique de profondeur dotée d'un palpeur pour mesurer la profondeur d'un sillon à au moins un endroit du pneu), ces moyens de mesure de l'usure des pneus communiquant avec l'appareil portable pour transmettre une valeur d'usure mesurée, l'appareil portable comportant des moyens de comparaison de la valeur reçue avec une valeur minimale en mémoire, l'appareil comportant en outre des moyens d'analyse des valeurs provenant des moyens de mesure, de corrélation et/ou de comparaison, et des moyens d'émission d'alertes et/ou de recommandations résultant de la prise en compte de tout ou partie de l'ensemble de ces valeurs.

De cette manière, l'utilisation d'un seul outil de contrôle permet de vérifier successivement ou simultanément que la mesure de la pression des pneus et la mesure du niveau d'usure sont cohérents, que le/les capteur()s TMPS fournit/-ssent une information correcte, et si l'ensemble des paramètres figurent dans une zone de fonctionnement sécurisée, ou nécessitent l'émission d'alertes et/ou de recommandations à destination d'un opérateur.

Selon un mode de réalisation préférentiel, le dispositif de mesure de la pression des pneus est intégré dans l'appareil portable. De cette manière, l'utilisation d'un seul outil de contrôle facilite le travail des opérateurs lors des interventions en fin de chaîne de fabrication ou dans un garage automobile et réduit les coûts et la place occupée par les appareils de contrôle.

Toujours selon un mode de réalisation préférentiel, le système de traitement de données émises par des dispositifs de mesures de l'état des pneus, comporte une jauge électrique de profondeur dotée d'un palpeur pour mesurer la profondeur d'un sillon à au moins un endroit du pneu, ladite jauge électrique communiquant avec l'appareil portable pour transmettre la valeur de profondeur actuellement mesurée, l'appareil portable comparant la valeur reçue avec une valeur minimale en moire et émettant un signal d'alarme si la valeur est en-dessous d'une valeur minimale de profondeur.

Avantageusement, ladite jauge électrique de profondeur est intégrée dans l'appareil portable. De cette manière, l'utilisation d'un seul outil de contrôle au lieu de trois outils facilite le travail des opérateurs lors des interventions en fin de chaîne de fabrication ou dans un garage automobile et réduit les coûts et la place occupée par les appareils de contrôle.

### 4. Liste des figures

D'autres caractéristiques et avantages de l'invention ressortiront de la description ci-après, fournie à titre d'exemple non limitatif, et faite en référence aux dessins annexés, dans lesquels :
- la figure 1 illustre un système de traitement pour la mesure de l'état des pneus d'un véhicule selon un exemple préféré de réalisation ;
- la figure 2 présente un exemple d'appareil portable destiné à récupérer des données provenant de capteurs TPMS et d'un manomètre électronique ;
- la figure 3 présente un exemple de réalisation d'un manomètre électronique comportant un dispositif de mesure de la pression ;
- la figure 4 présente un exemple de réalisation d'une jauge électrique de profondeur dotée d'un palpeur pour mesurer la profondeur d'un sillon d'un pneu ;
- la figure 5 présente un exemple d'organigramme des interventions d'un opérateur pour déterminer l'état des pneus embarqués sur un véhicule.

### 5. Description détaillée de l'invention

Les éléments identiques sur les différentes figures, portent les mêmes références.

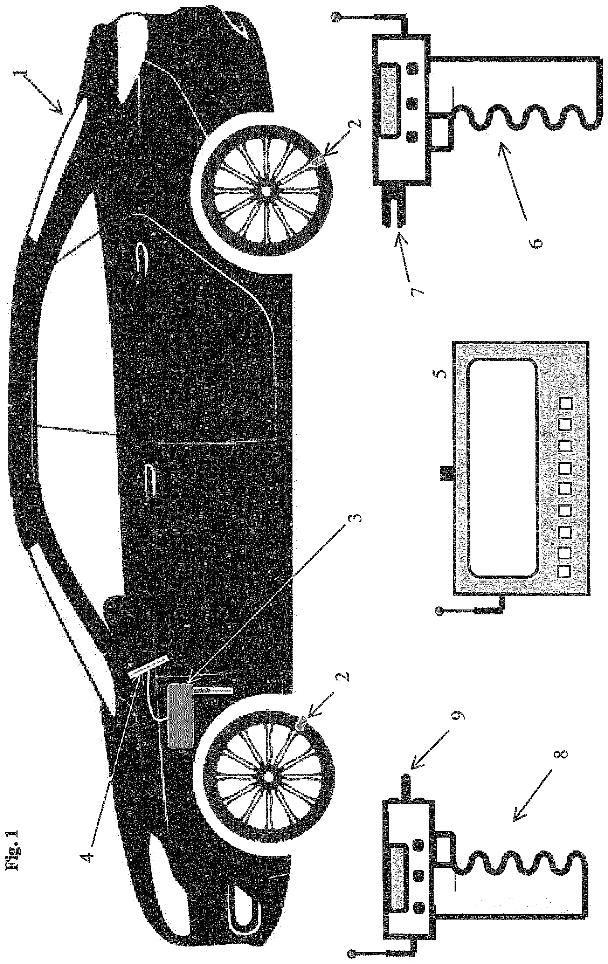

La **Fig. 1** représente un véhicule 1 doté de pneus comportant des capteurs TPMS actifs 2. Ce véhicule peut être une voiture de tourisme, un fourgon, un camion, un tracteur et de façon plus générale, tout véhicule se déplaçant sur des roues avec des pneus gonflés d'un gaz. Ce véhicule peut être à propulsion thermique ou électrique. Les capteurs associés à chaque roue comportent typiquement un module électronique comprenant une pile électrique, une carte de circuit imprimé avec des antennes ou des bobines de communication (pour la réception et la transmission), un capteur de pression d'air, un capteur de température, un dispositif de détection de rotation ou un accéléromètre, un contrôleur programmable et une mémoire pour mémoriser des données telles que l'identifiant ID du capteur ID. Compte tenu du mode d'encapsulation, il n'est généralement pas prévu de changer la pile. Les capteurs transmettent régulièrement leurs informations vers une ECU 3 par une liaison sans fil à courte portée, l'ECU étant dotée d'une antenne 4. L'ECU communique également avec le tableau de bord 5 pour transmettre des signaux représentatifs de l'état de certains équipements du véhicule et éventuellement un signal d'alarme.

Un système de traitement de données émises par des dispositifs de mesures de l'état des pneus comporte un outil 5 dit « appareil portable » et/ou « outil TPMS » destiné notamment à recevoir et traiter des données provenant de capteurs TPMS actifs. Cet outil visible sur la **Fig. 1** est un appareil portable comportant typiquement une batterie, un processeur, une mémoire, une interface utilisateur pour l'affichage d'informations et pour l'entrée de commandes, et un moyen de communication radio. Ce moyen de communication permet notamment la communication avec des capteurs TPMS et éventuellement la communication longue distance avec un serveur via un réseau.

Un système de traitement de données émises par des dispositifs de mesures de l'état des pneus comporte également des moyens additionnels de mesure de pression, constitué en l'occurrence par un manomètre électronique 6 comportant un dispositif de mesure de la pression 7 destiné à venir manuellement en contact avec la valve à l'extérieur du pneu pour mesurer sa pression. Cet équipement dispose d'une poignée et d'une gâchette pour déclencher la mesure et transmet par radio le résultat de cette mesure à l'outil TPMS ou appareil portable 5. L'outil TPMS compare alors la pression mesurée par le capteur TPMS 2 et par la pression mesurée par le manomètre électrique 6 et, si l'écart entre ces deux valeurs est important, alors l'outil TPMS signale par une alarme que l'un de ces dispositifs est défectueux.

Les moyens additionnels de mesure de pression peuvent aussi être constitués de tout moyen de mesure directe ou indirecte de la pression des pneus.

Un système de traitement de données émises par des dispositifs de mesures de l'état des pneus peut également comporter une jauge électrique de profondeur 8 dotée d'un palpeur 9 pour mesurer la profondeur d'un sillon sur chaque pneu. Cet équipement dispose également d'une poignée et d'une gâchette pour déclencher la mesure et transmet par radio le résultat de cette mesure à l'outil TPMS 5 qui centralise ainsi les données d'état des différents pneus.

Selon l'invention, les moyens de mesure de l'état des pneus peuvent aussi être constitués par tout autre moyen de mesure statique ou dynamique de l'état des sculptures et/ou de la bande de roulement du pneu.

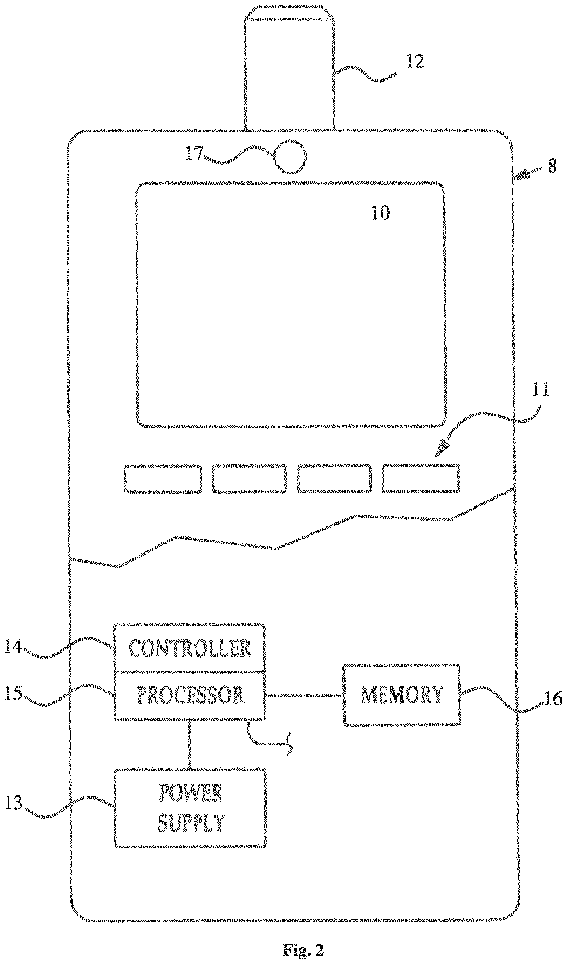

Un exemple de réalisation d'un outil TPMS 5 est maintenant décrit à l'aide de la **Fig. 2****.** L'outil TPMS 5 est un appareil portable comprenant un boîtier ayant une interface utilisateur en face avant qui comprend un panneau d'affichage 10 à cristaux liquides (LCD) de référence, plusieurs voyants lumineux 11, un clavier à bouton-poussoir (non visible sur la figure, situé en dessous de l'écran 10) et une antenne 12. L'antenne 12 est conçue pour communiquer avec le module de contrôle électronique ECU 3 et de façon sans fil avec des capteurs TPMS 2 installés dans les roues du véhicule 1. Dans l'exemple illustré par la **Fig. 2****,** l'antenne 12 est une antenne basse fréquence, mais d'autres antennes pour transmettre et recevoir d'autres fréquences peuvent être utilisées. L'outil TPMS 5 comporte également une alimentation électrique autonome 13 telle qu'une batterie rechargeable, un contrôleur 14 et un microprocesseur 15 exécutant un module logiciel stocké dans une mémoire 16. La mémoire est du type non-volatile afin de sauvegarder des données et éventuellement des historiques des différentes mesures effectuées. Selon une variante de réalisation, l'outil TPMS comporte également au moins un connecteur placé sur le côté de l'appareil pour communiquer via un câble notamment avec le réseau informatique d'une chaîne de fabrication et d'un garage automobile. L'outil TPMS 5 dispose d'un moyen de communication radio (en utilisant par exemple le Wifi) avec le manomètre électronique 6, et éventuellement une jauge électrique de profondeur 8 afin de recevoir leurs mesures d'état du pneu. Ce moyen de communication radio permet également de communiquer avec un serveur distant qui va notamment dresser l'historique d'entretien du véhicule.

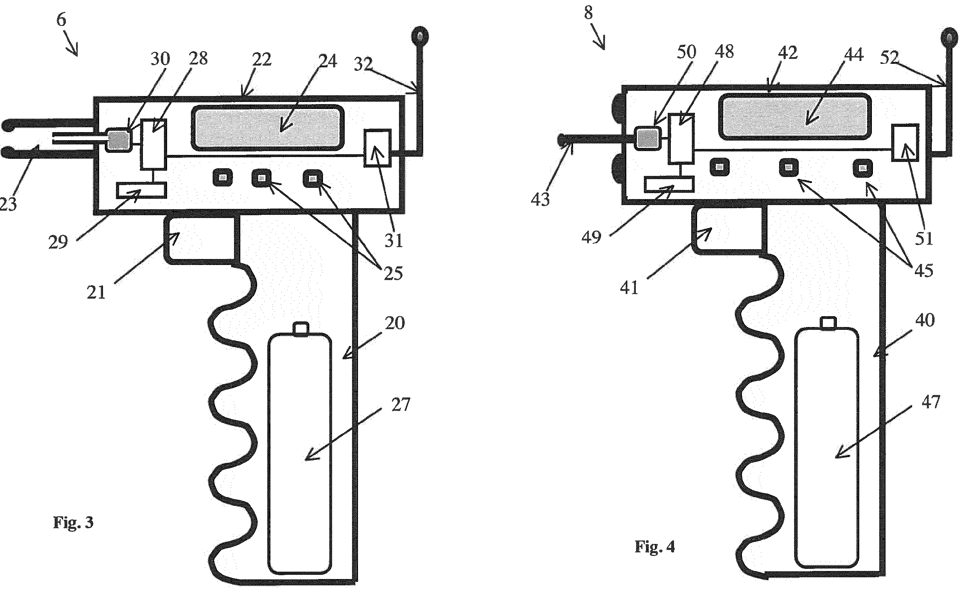

Un exemple de réalisation d'un manomètre électronique 6 comportant un dispositif de mesure de la pression 7 est maintenant décrit à l'aide de la **Fig. 3****.**

Cet appareil 6 se présente sous la forme d'un pistolet ayant une poignée 20 comportant une gâchette 21 et surmontée par un corps 22 se prolongeant vers l'avant par un embout 23. La poignée peut être facilement maintenue dans la main d'un utilisateur qui peut déclencher la mesure par une simple pression sur la gâchette 21. Le corps comporte sur le coté un écran 24 de type LCD par exemple, des boutons d'introduction de commande 25 et une antenne de communication 26. La **Fig. 3** montre par transparence des composants interne à l'appareil tel que : une alimentation électrique autonome 27 (une batterie rechargeable par exemple), un contrôleur 28 exécutant un module logiciel stocké dans une mémoire 29, un capteur de pression électronique 30 recevant par un tuyau le gaz contenu dans le pneu et un moyen de communication radio 31 relié à une antenne extérieure 32. Le dispositif de mesure de la pression 7 est constitué de l'embout 23, et du capteur de pression 31 et de son tube de raccordement à la valve. L'antenne 31 est une antenne basse fréquence, mais d'autres antennes pour transmettre et recevoir d'autres fréquences peuvent être utilisées. L'appareil 6 peut disposer de différents moyens pour émettre de l'information à destination de son utilisateur, tels que : l'écran 24, des témoins lumineux, un buzzer ou un haut-parleur délivrant un signal sonore, ou l'émission d'un retour haptique sur la poignée.

L'appui sur la gâchette par un opérateur déclenche la pluralité d'opérations suivantes sous la gestion du contrôleur 28 :
- la prise d'une donnée de mesure par le capteur 30,
- la mémorisation de la donnée dans la mémoire 29,
- l'affichage sur l'écran 24 de la donnée,
- l'émission par radio de la donnée par le moyen de communication 31 à destination de l'outil TPMS 5.

La communication entre le manomètre électronique 6 et l'outil TPMS 5 est bidirectionnelle, l'outil TPMS fournissant un avis de bonne réception de la donnée de mesure. Selon un perfectionnement, dès la réception de la donnée l'outil TPMS compare la pression mesurée par le capteur TPMS 2 associé à ce pneu et la valeur transmise et si l'écart entre les deux valeurs dépasse un certain seuil, il renvoie un message informant le manomètre électronique 6 de cette situation. A la réception, le manomètre électronique 6 transmet cette information de façon, visuelle et/ou sonore et/ou haptique à l'opérateur. Ce dernier peut alors décider de refaire la mesure en positionnant par exemple différemment l'embout sur la valve du pneu.

Selon un perfectionnement, le manomètre électronique 6 doté de son dispositif de mesure de la pression 7 est intégré dans l'outil TPMS 5. De cette manière, l'utilisation d'un seul outil de contrôle facilite le travail des opérateurs lors des opérations en fin de chaîne de fabrication ou dans un garage automobile et réduit les coûts et la place occupée par les appareils de contrôle.

Un exemple de réalisation d'une jauge électrique de profondeur 8 dotée d'un palpeur 9 pour mesurer la profondeur d'un sillon est maintenant décrit à l'aide de la **Fig. 4****.**

Cet appareil 8 se présente également sous la forme d'un pistolet ayant une poignée 40 comportant une gâchette 41 et surmontée par un corps 42 se prolongeant par une tige de mesure 43 qui fait saillie à l'avant de l'appareil. Le corps comporte sur le coté un écran 44, des boutons d'introduction de commande 45 et une antenne de communication 46. La **Fig. 4** montre par transparence des composants interne à l'appareil tel que : une alimentation électrique autonome 47 (une batterie rechargeable par exemple), un contrôleur 48 exécutant un module logiciel stocké dans une mémoire 49, un dispositif de mesure de distance 50 et un moyen de communication radio 51 relié à une antenne extérieure 52. L'antenne 51 est une antenne basse fréquence, mais d'autres antennes pour transmettre et recevoir d'autres fréquences peuvent être utilisées. L'appareil 8 peut disposer de différents moyens pour transmettre des informations à son utilisateur, tels que : l'écran 44, des témoins lumineux, un buzzer ou un haut-parleur délivrant un signal sonore, ou l'émission d'un retour haptique sur la poignée.

Lors d'une mesure de l'usure d'un pneu, l'opérateur s'approche de la bande de roulement et introduit la tige de mesure 43 dans un sillon jusqu'à ce que la surface circonférentielle du pneu vienne en contact avec la face avant du manomètre électronique 6. La tige de mesure se déplace linéairement et est associée à un potentiomètre à l'intérieur du dispositif de mesure de distance 50. Dans ce mode de réalisation, le déplacement de la tige de mesure provoque un changement de résistivité permettant de mesurer la longueur introduite dans le sillon et donc l'usure du pneu. D'autres dispositifs sont utilisables parmi lesquels : mesure du déplacement de la tige à l'intérieur du sillon par variation d'une inductance et de la capacité d'un condensateur, mesure par émission d'un rayon lumineux et détermination du temps de trajet (télémétrie LASER), mesure par ultrason, etc. De façon générale, tout dispositif de télémétrie dédié à la mesure de courtes distances (inférieure au centimètre) convient dans le cadre de la présente invention.

L'appui sur la gâchette par un opérateur déclenche la pluralité d'opérations suivantes sous la gestion du contrôleur 48 :
- la prise d'une donnée de mesure par le capteur 50,
- la mémorisation de la donnée dans la mémoire 49,
- l'affichage sur l'écran 44 de la donnée,
- l'émission par radio de la donnée par le moyen de communication 51 à destination de l'outil TPMS 5.

L'appareil 8 comporte une unité centrale et un programme permettant d'analyser les valeurs émises par les différents capteurs et les données reçues et de les corréler entre elles de manière à fournir un état global du pneu. Si ces valeurs ne se situent pas dans une fourchette de données recommandées alors l'appareil émet une alerte indiquant que ce pneumatique n'est pas utilisable en l'état et/ou affiche des recommandations sur le travail à effectuer.

La communication entre la jauge électrique de profondeur 8 et l'outil TPMS 5 est bidirectionnelle, l'outil TPMS fournissant un avis de bonne réception de la donnée de mesure. Selon un perfectionnement, dès la réception de la donnée l'outil TPMS compare la mesure avec une valeur réglementaire inscrite dans sa mémoire. Si la valeur mesurée est en-dessous de la valeur réglementaire l'outil TPMS renvoie un message informant la jauge électrique de profondeur 8 de cette situation. A la réception, la jauge transmet cette information de façon, visuelle et/ou sonore et/ou haptique à l'opérateur. Ce dernier est ainsi informé que le pneu ne respecte plus la réglementation.

La combinaison des trois tests de pression, des capteurs TPMS et d'usure des pneus combinés dans le même appareil diminue le prix d'achat par rapport à trois appareils séparés. De plus, l'utilisation d'un seul appareil facilite le travail de l'opérateur en diminuant ses déplacements moins importants et son temps d'intervention. Enfin, les combinaisons de mesure permises par cette combinaison de moyens de contrôle permettent à l'opérateur de mieux cerner les différents cas de figure liés aux différents états possibles des pneus, pneu par pneu mais aussi en prenant en compte la combinaison des mesures de l'ensemble des pneus d'un même véhicule. Afin d'optimiser le diagnostic, les alertes et les recommandations sont émises pour un véhicule donné (modalités de contrôle dites « wheel by wheel » et « Job by Job » (un "Job" est typiquement un nom ou un numéro donné à un véhicule), en terminologie anglo-saxonne)).

Selon une caractéristique avantageuse de l'invention, la jauge électrique de profondeur 8 est intégrée dans l'outil TPMS 5. De cette manière, l'utilisation d'un seul outil de contrôle facilite le travail des opérateurs lors des opérations en fin de chaîne de fabrication ou dans un garage automobile et réduit les coûts et la place occupée par les appareils de contrôle.

Après avoir détaillé les principaux éléments constitutifs de l'invention, nous allons maintenant décrire un exemple de mode de réalisation illustrant comment ceux-ci coopèrent.

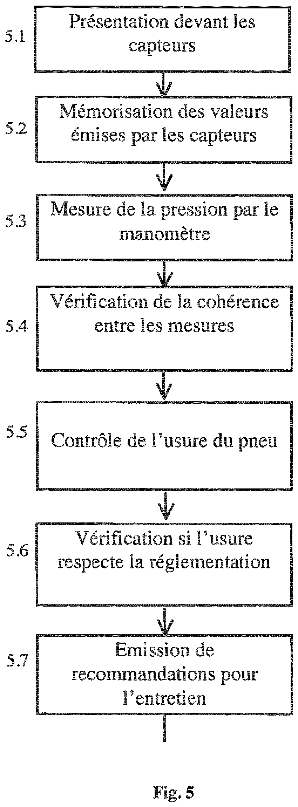

La **Fig. 5** présente un exemple d'organigramme des interventions d'un opérateur pour déterminer l'état des pneus embarqués sur un véhicule. Ces interventions sont réalisées par exemple sur les chaînes de fabrication de véhicule ou les garages automobile.

Lors d'une première étape 5.1, un opérateur utilise son outil TPMS 5 et le présente devant un premier capteur TPMS 2 monté sur un pneu. L'opérateur introduit sur le clavier de l'outil TPMS la position du pneu, par exemple : avant droit, avant gauche, pneu de secours, ... qui est devant l'outil. En appuyant sur une touche, l'outil TPMS 5 émet un signal de réveil vers ce capteur et celui-ci répond en transmettant ses données, dont la pression, la température et son identifiant. A l'issue de cette étape, l'identifiant du capteur TPMS est associé à un pneu que l'on peut facilement localiser sur le véhicule, et les mesures émises par ce capteur sont enregistrées dans la mesures de l'outil (étape 5.2).

Lors de l'étape 5.3, l'opérateur effectue la vérification manuelle de la pression des pneus à l'aide du manomètre électronique 6. Il branche l'embout 23 sur la valve du pneu et appuie sur la gâchette 21 pour lancer une mesure de pression. La mesure est transmise à l'outil TPMS 5 (étape 5.4) qui la compare avec la valeur transmise par le capteur 2 correspondant. Si l'écart entre les deux valeurs dépasse un certain seuil, l'outil TPMS renvoie un message indiquant une anomalie qui est signalée à l'opérateur selon diverses formes.

Lors de l'étape 5.5, l'opérateur effectue la vérification de l'usure des pneus à l'aide de la jauge électrique de profondeur 8. Il introduit alors la tige de mesure 43 dans le sillon à divers endroits du pneu et appuie sur la gâchette 41 pour lancer une mesure de pression. La mesure est transmise à l'outil TPMS 5 (étape 5.6) qui la compare avec une valeur réglementaire inscrite dans sa mémoire. Si la valeur mesurée est en-dessous de la valeur réglementaire, l'outil TPMS renvoie un message informant la jauge électrique de profondeur 8 de cette situation. A la réception, la jauge transmet cette information de façon, visuelle et/ou sonore et/ou haptique à l'opérateur. Ce dernier est ainsi informé que le pneu ne respecte plus la réglementation.

On peut rappeler que, selon la variante de réalisation où le manomètre électronique 6 doté de son dispositif de mesure de la pression 7, et/ou la jauge électrique de profondeur 8 est/sont intégré(s) dans l'outil TPMS 5, l'opérateur ne dispose que de deux, ou un seul outil, ce qui facilite son travail et réduit les coûts et la place occupée par les appareils de contrôle.

Lorsque la vérification de tous les pneus du véhicule est réalisée, l'outil TPMS dispose en mémoire de toutes les mesures et en exploitant les résultats, peut émettre des alertes générales et/ou des recommandations à destination de l'opérateur et du propriétaire (étape 5.7). Des exemples de recommandations sont maintenant décrits en partant de valeurs enregistrées en mémoire de l'outil TPMS. Au cours de l'intervention sur les pneus d'un véhicule, l'outil TPMS met à jour un tableau associant chaque pneu avec les données transmises par les différents appareils. Un tel tableau comporte typiquement :
- l'identifiant transmis par le capteur TPMS,
- la pression à l'intérieur du pneu mesurée par le capteur TPMS,
- la température du pneu mesurée par le capteur TPMS,
- la position du pneu relevée par l'opérateur et introduite par l'interface utilisateur 10 de l'outil TPMS,
- la pression mesurée par le manomètre électronique 6 et transmise par radio à l'outil TPMS,
- le niveau d'usure mesuré par la jauge électrique de profondeur 8 et transmise par radio à l'outil TPMS.

L'ensemble des données récoltées se présente sous la forme d'un tableau dont un exemple numérique est présenté ci-dessous :

| Identifiant | Pression mesurée | Température | Pression manomètre | Usure | Position |
|---|---|---|---|---|---|
| A4B7B9B3B6 | 2,23 | 30° | 2,2 | 3 | Avant - Droit |
| 9B6DC950AE | 2,17 | 30° | 2,1 | 2,8 | Avant - Gauche |
| 4794C4D2AB6 | 0 | 30° | 2,2 | 6 | Arrière - Gauche |
| 9AbD87DE3AB | 1,8 | 35° | 1,8 | 5,9 | Arrière - Droit |
| 897987DE3AB | 2,18 | 21° | 2,2 | 2,2 | Roue de secours |

A la vue des résultats ci-dessus reproduits, l'outil TPMS a émis divers messages et signaux au cours de l'intervention sur ce véhicule. Lors de la prise de la pression du pneu arrière gauche par le manomètre électronique 6, l'outil TPMS5 a émis un signal d'alarme en signalant une importante divergence entre la mesure du capteur TPMS (qui a transmis 0 bar) et la mesure effectuée par le manomètre électronique 6. La cause de cette divergence est très probablement due à une panne du capteur TPMS qu'il faudra donc remplacer. L'outil TPMS a également émis un signal d'alarme lors de la prise de la pression du pneu arrière droit car celui-ci est sous-gonflé et présente une température anormale. Comme il est peu usé, l'outil TPMS émet une recommandation de le réparer et non de la changer, ou de prendre la roue de secours. A la fin de l'intervention sur les cinq pneus, l'outil TPMS émet un message recommandant d'inverser les pneus avant et les pneus arrière car dans le cas d'un véhicule ayant une traction avant (cas le plus répandu) il est préférable de mettre les pneus les moins usés à l'avant.

Comme on peut le voir sur l'exemple ci-dessus, l'utilisation d'un seul outil de contrôle permet de vérifier facilement que les capteurs TPMS fonctionnent correctement et que la mesure de la pression des pneus et la mesure du niveau d'usure sont conformes à la réglementation en vigueur. De plus, le fait de n'utiliser qu'un seul outil de contrôle facilite le travail des opérateurs lors des opérations en fin de chaîne de fabrication ou dans un garage automobile et réduit les coûts et la place occupée par les appareils de contrôle. Enfin, le fait que les mesures soient transmises vers un seul appareil qui centralise le contrôle, facilite l'émission d'un compte rendu de l'état du pneu et permet de guider l'opérateur vers les actions à entreprendre et d'aider le propriétaire du véhicule à prendre les décisions qui vont dans le sens de la sécurité.

Bien que la présente invention ait été décrite en référence aux modes de réalisation particuliers illustrés, celle-ci n'est nullement limitée par ces modes de réalisation, mais ne l'est que par les revendications annexées. En particulier, la présente invention peut être utilisée par tout type de véhicule doté de roues gonflées par un gaz. On notera que des changements ou des modifications pourront être apportés par l'Homme du métier.

## Revendications

1. Système de traitement de données émises par des dispositifs de mesures de l'état des pneus, comportant notamment des capteurs de pression (2) montés sur les pneus d'un véhicule (1), comportant un appareil portable (5) doté d'une interface utilisateur (10,11) apte à entrer en communication avec lesdits capteurs de pression, le système comportant en outre un manomètre électronique (6) de mesure de la pression des pneus communiquant avec l'appareil portable pour transmettre la valeur de pression mesurée, ledit manomètre électronique (6) comportant un capteur de pression (7) destiné à venir manuellement en contact avec la valve à l'extérieur du pneu pour mesurer sa pression, l'appareil portable comportant des moyens de corrélation des deux mesures de pression,
**caractérisé en ce que** le système comporte en outre des moyens (8, 9) de mesure de l'usure des pneus communiquant avec l'appareil portable pour transmettre une valeur d'usure mesurée, l'appareil portable comportant des moyens de comparaison de la valeur reçue avec une valeur minimale en mémoire,
l'appareil portable comportant en outre des moyens d'analyse des valeurs provenant desdits moyens de mesure, de corrélation et/ou de comparaison, des moyens d'émission d'alertes et/ou de recommandations résultant de la prise en compte de tout ou partie de l'ensemble de ces valeurs, et une mémoire contenant une valeur de pression minimale pour ce véhicule, l'appareil portable (5) émettant un message d'alarme lorsque la valeur de pression mesurée par le capteur de pression (2) et par le manomètre électronique (6) se situe en-dessous de cette valeur minimale.

2. Système de traitement de données selon la revendication 1, **caractérisé en ce que** le dispositif de mesure de la pression des pneus est intégré dans l'appareil portable.

3. Système de traitement de données selon l'une quelconque des revendications précédentes, **caractérisé en ce que** lesdits moyens de mesure de l'usure des pneus sont constitué par une jauge électrique de profondeur (8) dotée d'un palpeur (9) pour mesurer la profondeur d'un sillon à au moins un endroit du pneu, et **en ce que** la valeur d'usure mesurée est la valeur de profondeur relevée par ladite jauge,

4. Système de traitement de données selon la revendication 3, **caractérisé en ce que** l'appareil portable comparant la valeur d'usure mesurée avec une valeur minimale en mémoire émet un signal d'alarme si la valeur est en-dessous d'une valeur minimale de profondeur.

5. Système de traitement de données selon la revendication 3, **caractérisé en ce que** la jauge électrique de profondeur est intégrée dans l'appareil portable (5).

## Patentansprüche

1. System zur Verarbeitung von Daten, die von Geräten zur Messung des Status von Reifen emittiert werden, umfassend insbesondere Drucksensoren (2), die in den Reifen eines Fahrzeuges (1) angeordnet sind, umfassend eine tragbare Vorrichtung (5), die eine Benutzerschnittstelle (10,11) aufweist, die dazu geeignet ist, in eine Kommunikation mit den Drucksensoren einzutreten, wobei das System darüber hinaus ein elektronisches Reifendruckmessmanometer (6) aufweist, das mit der tragbaren Vorrichtung zur Übertragung des gemessenen Druckwertes in Verbindung steht, wobei das elektronische Manometer (6) einen Drucksensor (7) aufweist, der dazu bestimmt ist, mit dem Ventil an der Außenseite des Reifens manuell in Kontakt zu kommen, um seinen Druck zu messen, wobei die tragbare Vorrichtung Korrelationsmittel für die beiden Druckmessungen aufweist,
**dadurch gekennzeichnet, dass** das System weiterhin Mittel (8,9) zur Messung des Reifenverschleißes umfasst, die mit der tragbaren Vorrichtung kommunizieren, um einen gemessenen Abnutzungswert zu übertragen, wobei die tragbare Vorrichtung Mittel zum Vergleich des empfangenen Werts mit einem gespeicherten minimalen Wert aufweist,
dass die tragbare Vorrichtung außerdem Mittel zur Analyse, Korrelation und/oder Vergleich der Werte, die von den Messmitteln kommen, Ausgabemittel für Warnungen und/oder Empfehlungen umfasst, die aus der Berücksichtigung der ganzen oder eines Teils der Gesamtheit dieser Werte resultieren, sowie einen Speicher, der einen minimalen Druckwert für das Fahrzeug enthält, wobei die tragbare Vorrichtung (5) eine Alarmnachricht abgibt, wenn sich der von dem Drucksensor (2) und von dem elektronischen Manometer (6) gemessene Druckwert unterhalb von diesem minimalen Wert befindet.

2. System zur Verarbeitung von Daten nach Anspruch 1, **dadurch gekennzeichnet, dass** das Reifendruckmessgerät in die tragbare Vorrichtung integriert ist.

3. System zur Verarbeitung von Daten nach einem der vorstehenden Ansprüche, **dadurch gekennzeichnet, dass** die Mittel zur Messung des Reifenverschleißes aus einem elektrischen Tiefenmesser (8) gebildet sind, der mit einem Fühler (9) zur Messung der Tiefe einer Rille an mindestens einer Stelle des Reifens versehen ist, und dass der gemessene Verschleißwert, der von dem genannten Messgerät gemessene Tiefenwert ist.

4. System zur Verarbeitung von Daten nach Anspruch 3, **dadurch gekennzeichnet, dass** die tragbare Vorrichtung, die den gemessenen Verschleißwert mit einem Mindestwert im Speicher vergleicht, ein Alarmsignal ausgibt, wenn der Wert unter einem Mindesttiefenwert liegt.

5. System zur Verarbeitung von Daten nach Anspruch 3, **dadurch gekennzeichnet, dass** der elektrische Tiefenmesser in die tragbare Vorrichtung (5) integriert ist.

## Claims

1. System for processing data transmitted by tyre-condition measurement devices, including in particular pressure sensors (2) mounted on the tyres of a vehicle (1), including portable apparatus (5) provided with a user interface (10, 11) able to enter into communication with said pressure sensors, the system further including an electronic pressure gauge (6) for measuring the pressure of the tyres communicating with the portable apparatus in order to transmit the pressure value measured, said electronic pressure gauge (6) including a pressure sensor (7) intended to come manually in contact with the valve outside the tyre in order to measure the pressure thereof, the portable apparatus including means for correlating the two pressure measurements,
**characterised in that** the system further includes means (8, 9) for measuring the wear on the tyres communicating with the portable apparatus in order to transmit a measured wear value, the portable apparatus including means for comparing the received value with a minimum value in memory,
the portable apparatus further including means for analysing values coming from said measurement, correlation and/or comparison means, means for sending alerts and/or recommendations resulting from the taking into account of all or some of the whole of these values, and a memory containing a minimum pressure value for this vehicle, the portable apparatus (5) sending an alarm message when the pressure value measured by the pressure sensor (2) and by the electronic pressure gauge (6) is situated below this minimum value.

2. Data-processing system according to claim 1, **characterised in that** the tyre pressure measurement device is integrated in the portable apparatus.

3. Data-processing system according to any one of the preceding claims, **characterised in that** said tyre-wear measurement means are formed by an electronic depth gauge (8) provided with a probe (9) for measuring the depth of a groove at at least one point on the tyre, and **in that** the measured wear value is the depth value recorded by said gauge.

4. Data-processing system according to claim 3, **characterised in that** the portable apparatus comparing the measured wear value with a minimum value in memory sends an alarm signal if the value is below a minimum depth value.

5. Data-processing system according to claim 3, **characterised in that** the electronic depth gauge is integrated in the portable apparatus (5).
